Europäisches Patentamt

European Patent Office

Office européen des brevets

(11) Veröffentlichungsnummer : **0 029 446**
**B1**

(12) **EUROPÄISCHE PATENTSCHRIFT**

(45) Veröffentlichungstag der Patentschrift :
13.07.83

(51) Int. Cl.³ : **A 23 B   4/02**

(21) Anmeldenummer : **80901070.5**

(22) Anmeldetag : **04.06.80**

(86) Internationale Anmeldenummer :
**PCT/EP 80/00035**

(87) Internationale Veröffentlichungsnummer :
**WO WO/80026 (11.12.80 Gazettee 80/28)**

(54) **VORRICHTUNG ZUM PÖKELN VON FLEISCH.**

(30) Priorität : 05.06.79 DE 2922714
19.12.79 DE 2951033
22.05.80 DE 3019483

(43) Veröffentlichungstag der Anmeldung :
03.06.81 Patentblatt 81/22

(45) Bekanntmachung des Hinweises auf die Patenterteilung : 13.07.83 Patentblatt 83/28

(84) Benannte Vertragsstaaten :
**AT CH DE FR GB LI NL SE**

(56) Entgegenhaltungen :
**FR A 2 274 227**
**FR A 2 318 588**
**FR A 2 375 830**
**GB A 862 307**

(73) Patentinhaber : **SOMMER, Hans**
**Ziegelhütte**
**D-6951 Limbach-Heidersbach (DE)**

(72) Erfinder : **SOMMER, Hans**
**Ziegelhütte**
**D-6951 Limbach-Heidersbach (DE)**

(74) Vertreter : **Heinen, Franz, Dipl.-Ing.**
**In den Pfädelsäckern 25**
**D-6900 Heidelberg1 (DE)**

Jouve, 18, rue St-Denis, 75001 Paris, France

## Vorrichtung zum Pökeln von Fleisch.

Die Erfindung bezieht sich auf eine Vorrichtung zum Pökeln von Fleischstücken im Durchlauf. Bei einer solchen bekannten Vorrichtung dieser Art (FR-A-2 375 830) gelangen die Fleischstücke zunächst zwischen die beiden Walzen eines Messerwalzenpaares, deren Messer nur in die Fleischstücke einstechen. Dieses Messerwalzenpaar stellt Öffnungen in den Fleischstücken her, in welche in einer der Vorrichtung nachgeschalteten, mit Pökellake gefüllten, unter Vakuum stehenden Trommel, nachdem die Fleischstücke in diese verbracht sind, Pökellake eintritt. Das Messerwalzenpaar wirkt weiterhin als Zuförderer für das nachgeordnete Injektionswalzenpaar, dessen Walzen mit Nadeln bestückt sind, welche Längsbohrungen aufweisen, in welche Querbohrungen münden, durch welche in die durchlaufenden Fleischstücke Pökellake injiziert wird. Jede Injektionsnadelwalze weist einen rohrförmigen, die Injektionsnadeln aufnehmenden Walzenmantel auf, der drehbar und formschlüssig auf ein stationär am Gehäuse befestigtes Rohr aufgesteckt ist, welches an einen unter Druck stehenden Pökellakenbehälter angeschlossen ist. Der Walzenmantel weist in die radialen Bohrungen der Injektionsnadeln mündende radiale Bohrungen auf, denen bis zum Hohlraum reichende sektorförmige Ausnehmungen in der den Fleischstücken zugewandten Partie des Rohres gegenüberliegen. Über eine weitere diesem Walzenpaar nachgeschaltete Fördervorrichtung gelangen die Fleischstücke in die bereits erwähnte Vakuumtrommel, in welcher sie mehrere Stunden verbleiben müssen, wobei die Vakuumtrommel in gewissen Zeitabständen zum Rotieren gebracht wird.

Es ist daher die Aufgabe der Erfindung, eine Vorrichtung dieser Art in einer solchen Weise weiterzubilden, daß auf die erwähnte Vakuumtrommel verzichtet werden kann.

Dies wird in erster Linie dadurch erreicht, daß mehrere Nadelwalzenpaare hintereinander angeordnet sind. Hierzu werden erfindungsgemäß zwei unterschiedliche Lösungen vorgeschlagen.

Bei der ersten Lösung dieser Aufgabe ist entsprechend einer ersten Ausführungsform vorgesehen, daß mindestens zwei Injektionsnadelwalzenpaare mit Sicherheitsabstand zwischen den Nadelspitzen angeordnet sind, und daß die Injektionsnadeln mit an der der Drehachse zugewandten Seite verschloßenen Längsbohrungen versehen sind, und daß der Innendurchmesser der Hohlkörper größer ist als der Außendurchmesser des mit Bohrungen versehenen Rohres und daß das Rohr eine den passierenden Fleischstücken zugewandten Abflachung aufweist, und die Injektionsnadeln in den Hohlraum zwischen dem Rohr und dem Hohlkörper so weit hineinragen, daß sie die Außenfläche des Rohres berühren, daß weiterhin die Injektionsnadeln im Bereich der Hohlkörper eine senkrecht zur Längsbohrung verlaufende zusätzliche Bohrung aufweisen, welche bei einer Verschiebung der Hohlnadeln zur Drehachse hin in den mit unter Druck stehender Pökellake gefüllten Hohlraum zwischen dem Rohr und dem Hohlkörper gelangen und so Pökellake unter Druck in die Hohlnadeln eindringen läßt.

Die Abflachung des Rohres, welche durch Wegfräsen eines Segmentes von der Kreisform des Querschnittes erreichbar ist, ist, wie gesagt, den die Vorrichtung passierenden Fleischstücken zugewandt. Diejenigen Injektionsnadeln der Walze, die nicht in das Fleisch einstechen, liegen dann in dem Hohlraum zwischen Walzeninnenfläche und Rohraußenflächen an. Die senkrecht zur Längsbohrung liegenden radialen Bohrungen befinden sich dabei innerhalb des Hohlkörpers der Walze, so daß keine Pökellake in die Hohlnadeln gelangen kann. Erst wenn die Nadeln an die Abflachung gelangen, können sie beim Einstechen in ein Fleischstück in Richtung der Drehachse verschoben werden, so daß erst dann die radialen Bohrungen in den Hohlraum zwischen Hohlkörper und Rohr gelangen und die Pökellake unter Druck in die Hohlnadeln und damit in das Fleischstück eindringen können. Diejenigen Nadeln an dieser Stelle, die nicht durch das Eindringen in das Fleisch nach innen verschoben werden können, stehen unter dem Druck der Pökellake und können, auch wenn sie an der unteren Walze angeordnet sind, nicht nach unten fallen, so daß hier vermieden wird, daß Pökellake außerhalb des Fleischstückes verspritzt wird. Durch diese Vorrichtung wird somit erreicht, daß die Vakuumtrommel entfallen kann, womit auch eine sehr erhebliche Erhöhung des Durchsatzes erreicht wird. Die Vorrichtung hat weiterhin den Vorteil, daß, wenn die Fleischstücke nicht nahtlos hintereinander gefördert werden, in dem Zeitpunkt, in welchem sich keine Fleischstücke unter den Nadelwalzen befinden, keine Pökellake unter Druck herausspritzen kann, die nicht in das Fleisch eindringt, was zu einem Druckabfall in den Nadeln der anderen Nadelwalzen führen würde.

Bei der zweiten Ausführungsform der Erfindung zur Lösung der oben angegebenen Aufgabe ist vorgesehen, daß mindestens zwei Injektionsnadelwalzen mit Sicherheitsabstand zwischen den Nadelspitzen achsparallel angeordnet sind und daß die Injektionsnadeln mit durchgehenden Längsbohrungen versehen sind, daß den radialen Bohrungen der Hohlkörper, in der den passierenden Fleischstücken zugewandten Partie des Rohres, bis zum Hohlraum reichende Bohrungen gegenüberliegen, daß im Wirkbereich der Injektionsnadeln der Injektionsnadelwalzen Gleiter für die hindurchlaufenden Fleischstücke vorgesehen sind. Diese Vorrichtung ist wohl einfacher im Aufbau als die eingangs erwähnte Vorrichtung, hat aber bei stark in der Breite wechselnden Fleischstücken den Nachteil, daß aus denjenigen Nadeln, welche nicht in das Fleisch einstechen, Pökellake herausspritzen kann ohne genutzt zu werden. Es wird aber bei dieser Vorrichtung verhindert, daß Fleischstücke an den Nadeln hängenbleiben.

Vorteilhafte Ausführungsformen ergeben sich aus den Unteransprüchen 2 und 3 sowie 5-8. Bei einer weiteren Ausführungsform der Erfindung ist vorgesehen, daß jeweils je zwei Injektionsnadelwalzen übereinander angeordnet sind, und daß die am Gehäuse gelagerten Stützlager eine Bewegung der Gleiter rückwärts — den Abstand zum gegenüberliegenden Gleiter vergrößernd — gegen die Kraftwirkung eines Rückstellelementes und vorwärts bis an einen Anschlag erlauben. Die Fleischstücke werden dabei etwa in der Mittelebene zwischen den nebeneinander angeordneten Nadelwalzen geführt und es wird verhindert, daß die Fleischstücke an den Nadeln hängen bleiben können.

Bei einer alternativen Ausführung der Erfindung ist vorgesehen, daß die Injektionsnadelwalzen mit Sicherheitsabstand zwischen den Nadelspitzen achsparallel in Förderrichtung hintereinander, mit ihren Drehachsen in einer Ebene liegend angeordnet sind, und daß unterhalb der Injektionsnadelwalzen eine mitlaufende Fördereinrichtung vorgesehen ist, deren Antrieb mit dem Antrieb der Injektionsnadelwalzen gekuppelt ist, und welche ein endloses, aus mehreren gelenkig miteinander verbundenen Lamellen bestehendes Band aufweist. Dabei sind im Bereich der Injektionsnadelwalzen unterhalb deren Drehachsen in den Zwischenräumen zwischen den Nadelkreisen mehrere miteinander verbundene, in vertikaler Richtung verstellbare Gleitschienen vorgesehen, welche als Abstreifrechen für die Fleischstücke dienen.

Weitere Einzelheiten der Erfindung ergeben sich aus den Zeichnungen und der zugehörigen Beschreibung.

Es zeigen :

Figur 1   eine Vorrichtung nach der Erfindung mit zwei Walzenpaaren in einem vertikalen Längsschnitt,

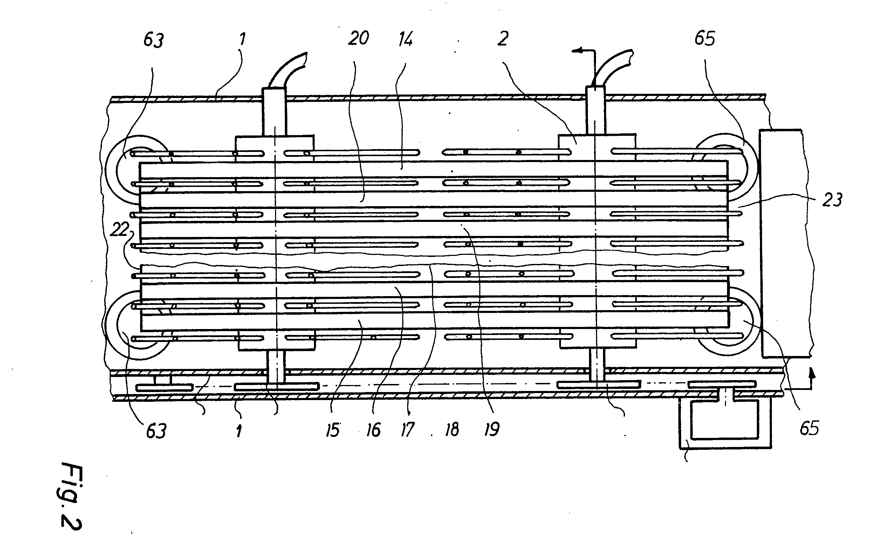

Figur 2   einen horizontalen Schnitt aus Fig. 1 im Ausschnitt,

Figur 3   einen vertikalen Schnitt durch eine Nadelwalze der ersten Ausführungsform der Erfindung,

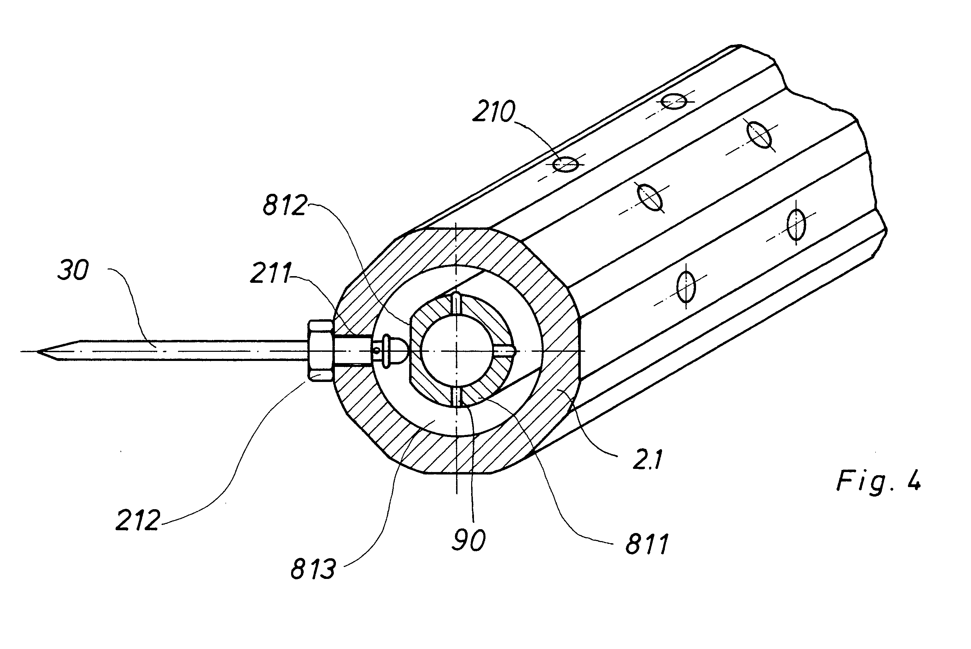

Figur 4   die Nadelwalze in perspektivischer Darstellung,

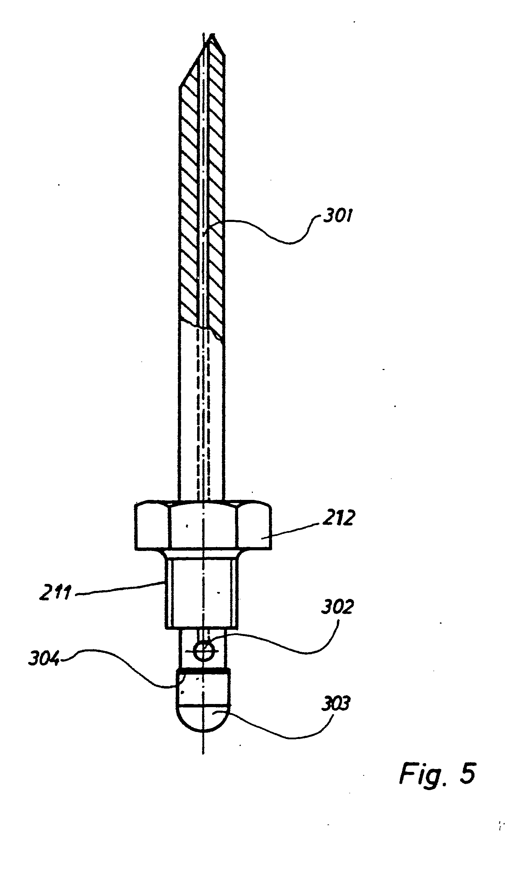

Figur 5   eine Injektionsnadel.

Figur 6   eine Vorrichtung nach der Erfindung mit nebeneinander angeordneten Nadelwalzen,

Figur 7   einen Schnitt durch eine Nadelwalze entsprechend der zweiten Lösung,

Figur 8   einen Schnitt durch eine Nadelwalze aus Fig. 7.

In den Zeichnungen ist mit 1 das Gehäuse bezeichnet, in welchem z. B. zwei aus je zwei Injektionswalzen 2 bestehende Injektionswalzenpaare drehbar angeordnet sind.

Die Fleischstücke werden durch einen Zuförderer 8 mit einem Transportband 10 herangebracht und in Pfeilrichtung in den Zwischenraum zwischen den beiden ersten Injektionsnadelwalzen 2 gebracht.

Die Injektionsnadelwalzen werden durch nicht dargestellte Antriebselemente im Gleichlauf angetrieben. Dabei erfolgt der Antrieb der Walzen eines Walzenpaares jeweils gegenläufig. Die Nadelkränze eines Walzenpaares sind jeweils auf Lücke gestellt, so daß sie sich nicht berühren, obwohl die Länge der Nadeln so groß ist, daß deren Spitzen die Mittelebene 26 zwischen den Walzenpaaren überragen.

Am Umfang der Injektionsnadelwalzen sind radial gerichtete Injektionsnadeln 30 vorgesehen. Die Spitzen der Injektionsnadeln können dabei die Spitzen der benachbarten Nadelwalzen nicht berühren, da die Nadelwalzen jeweils mit ihren Injektionsnadeln auf Lücke gestellt sind. Zwischen den Injektionsnadelwalzen kann aber auch ein Sicherheitsabstand vorgesehen sein, in den die Spitzen der Injektionsnadeln nicht hineinreichen.

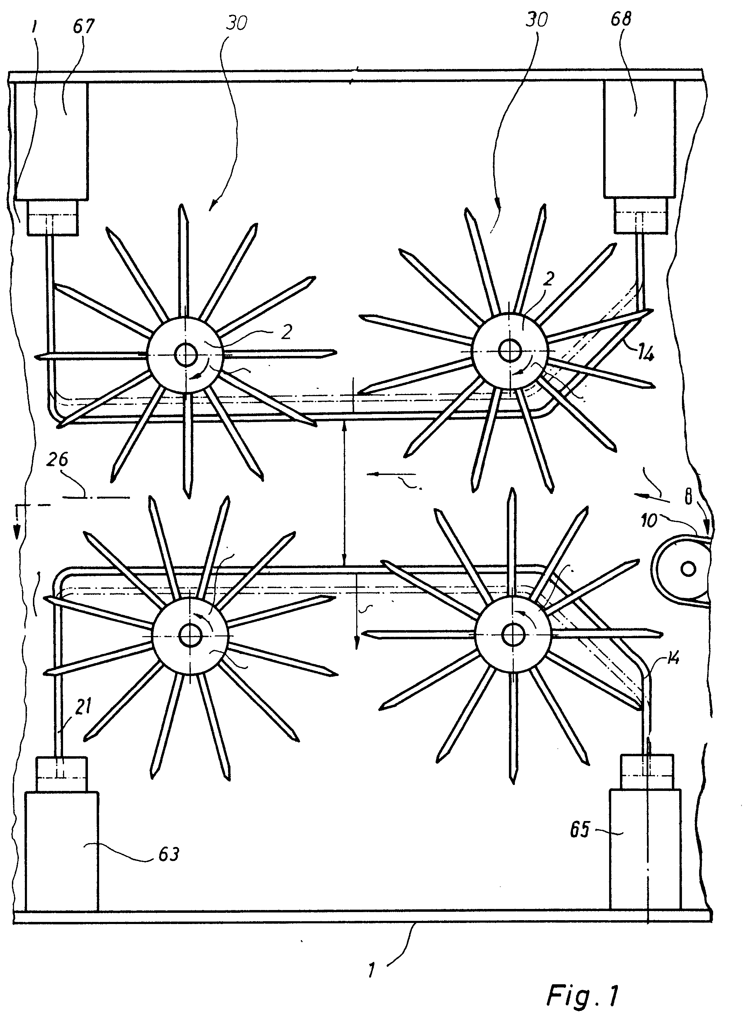

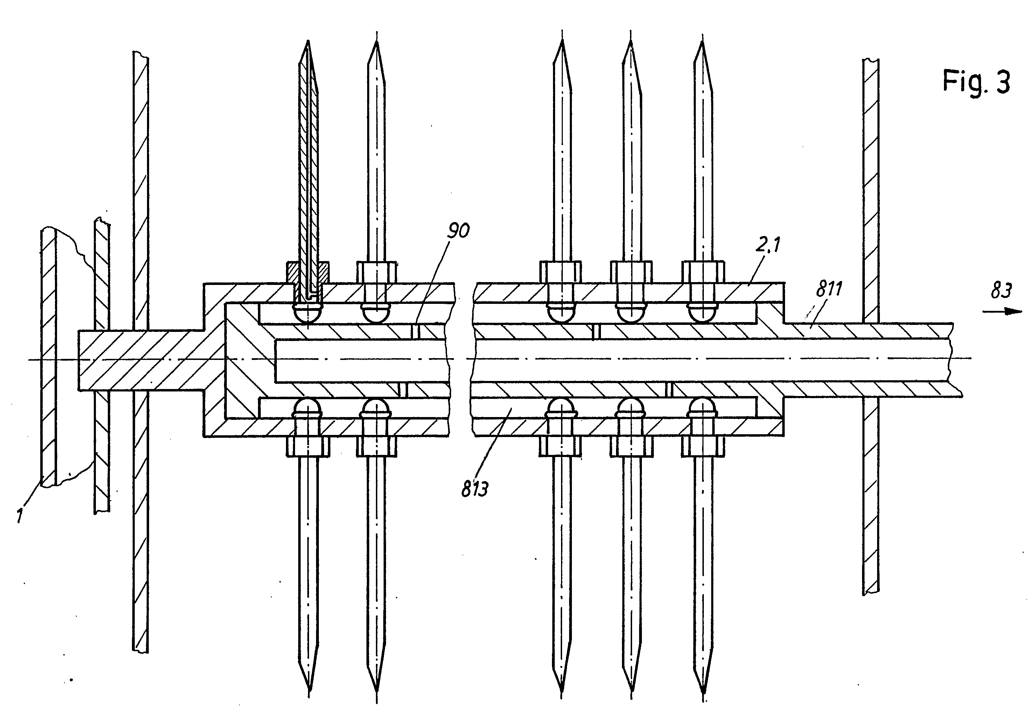

Die Nadelwalzen 2 jedes der Walzenpaare sind gleichartig aufgebaut, wie dies insbesondere in Fig. 3 dargestellt ist. Jede Nadelwalze ist aus einem Hohlkörper 2.1 aufgebaut, welcher konzentrisch zu einem stationär am Gehäuse 1 befestigten Rohr 811 drehbar angeordnet ist. Das Rohr 811 ist mit radialen Bohrungen 90 versehen und an einen unter Druck stehenden Pökellakenbehälter 83 angeschlossen. Der Innendurchmesser des Hohlkörpers 2.1 ist größer als der Außendurchmesser des Rohrs 811, so daß zwischen beiden ein im Querschnitt ringförmiger Hohlraum 813 vorhanden ist. Das Rohr 811 weist an seiner den Fleischstücken zugewandten Seite, in Fig. 1 also an der unteren bzw. oberen Seite eine Abflachung 812 auf, auf deren Funktion später zurückgekommen wird.

Der Hohlkörper 2.1 der Walzen weist radiale Bohrungen 210 auf, in welchen die Injektionsnadeln 30, 31 ... 36 radial beweglich angeordnet sind. Die Bohrungen 210 sind mit einem Gewinde 211 versehen, in welche Muttern 212 eingeschraubt sind, welche die Injektionsnadeln führen.

Die Injektionsnadel 30 ist wie die übrigen mit einer durchgehenden Längsbohrung 301 versehen, welche an dem im Hohlraum 813 zwischen Rohr 811 und Walze befindlichen Ende mit einem Verschlußstopfen 303 verschlossen ist. Ein an diesem Ende weiterhin vorgesehener Bund 304 verhindert ein Herausziehen der Injektionsnadel aus der Bohrung 210 des Hohlkörpers. Oberhalb dieses Bundes ist weiterhin eine radiale Bohrung 302 vorgesehen, die bis zur Längsbohrung 301 reicht. Die Höhe des Verschlußstopfens 303, der ein halbkugelförmiges Ende aufweist, ist gerade so groß, daß er an der Oberfläche des Rohres 811 anliegt. Die radiale Bohrung 302 liegt dabei im Inneren der Mutter 212, hat also keine Verbindung zum Hohlraum 813.

Wird die Walze 2 gedreht, gelangt die Injektionsnadel 30 in den Bereich der Abflachung 812 des Innenrohres 81. Solange die Nadel sich außerhalb eines Fleischstückes befindet, wird diese unter dem Druck der Pökellake im Hohlraum 813 in der gleichen Lage verbleiben, wie sie vorher war.

Erst wenn die Nadel in ein Fleischstück einsticht, wird sie zur Drehachse hin verschoben. Jetzt erst wird die radiale Bohrung 302 freigegeben und gelangt in den Hohlraum 813 und die Pökellake gelangt unter hohem Druck in die Längsbohrung 301 und so in das zu pökelnde Fleischstück. Auf diese Weise wird mit Erfolg verhindert, daß bei schmäleren Fleischstücken und in der Lücke zwischen zwei Fleischstücken die Pökellake aus den Nadeln herausspritzt, wodurch sich für die übrigen Nadelwalzen ein Druckabfall und ein unnötiger Energieverbrauch ergäbe.

Die Vorrichtung nach der Erfindung verhindert so nicht nur das unnötige Verspritzen von Pökellake, sondern erlaubt auch eine Energieeinsparung bei der Druckpumpe für die Pökellake.

In der Zeichnung sind weiterhin mit 15 und 14 zwei bügelförmig gebogene Gleitschienen bezeichnet, welche sich parallel zu einer horizontal zwischen die Achsen der Walzenpaare gelegten Ebene 26 erstrecken und welche durch Querstege miteinander verbunden sind, an welchen zusätzliche Gleitschienen 16-20 befestigt sind.

Die Gleitschienen sind jeweils mittels in vertikaler Richtung beweglichen Ständern 63, 65, 67 und 68 am Gehäuse 1 befestigt. Die Ständer sind mit eingebauten Federn versehen, welche eine Bewegung in vertikaler Richtung um einen bestimmten Betrag zulassen. Auf diese Weise werden die Fleischstücke beim Einstechen der Injektionsnadeln zwischen den Walzen gehalten.

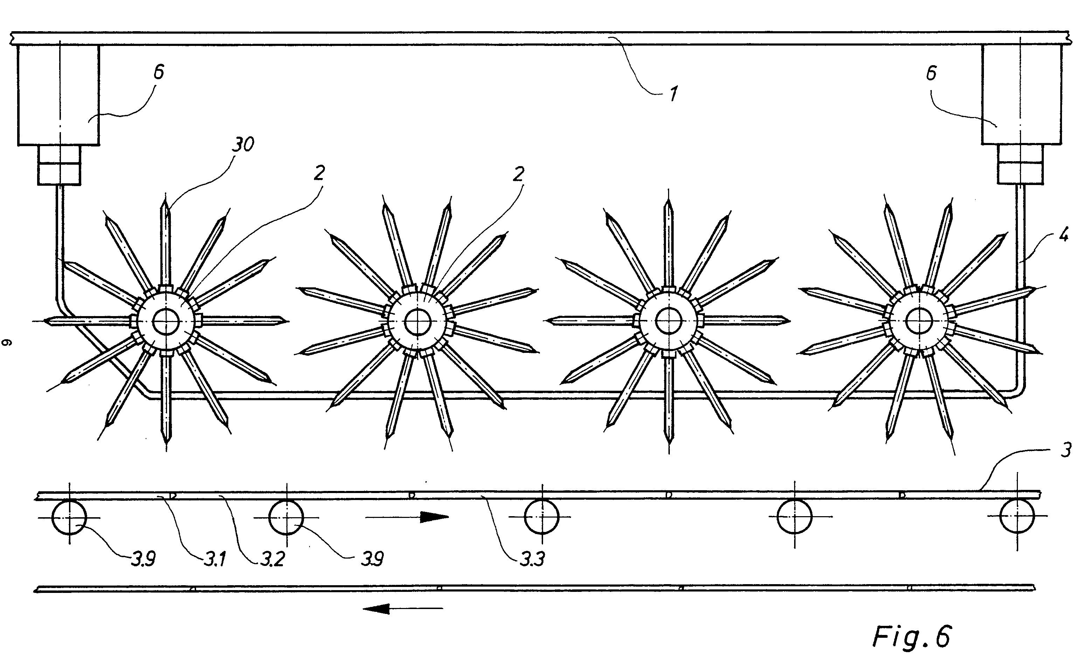

Bei dem in Fig. 6 dargestellten Ausführungsbeispiel der Vorrichtung sind die Injektionsnadelwalzen 2 achsparallel mit horizontaler Walzenachse in dem Gehäuse 1 gelagert. In der Zeichnung sind vier Injektionsnadelwalzen dargestellt. Die Fleischstücke werden durch einen nicht dargestellten Zuförderer herangebracht und in Pfeilrichtung über die Fördervorrichtung 3 in den Zwischenraum zwischen der ersten Injektionswalze 2.1 und der Fördereinrichtung gebracht. Mit 4 sind zwei Gleitschienen bezeichnet, die zwischen den Nadelkränzen der Nadelwalzen 2.1, 2.2 angeordnet sind. Die Gleitschienen 4 sind bügelförmig gebogen und durch Querstege miteinander verbunden. Die Gleitschienen erstrecken sich in einer Ebene, die sich planparallel zur Oberfläche der Transportvorrichtung 3 erstreckt, welche ein endloses, aus mehreren gelenkig miteinander verbundenen Lamellen 3.1, 3.2, 3.3 bestehendes Transportband aufweist, welches auf mehreren Transportrollen 3.9 abgestützt ist.

Die Gleitschienen 4 sind in vertikaler Richtung bis zu einer durch einen Anschlag begrenzten Stellung verstellbar. Dabei entspricht der Abstand zu den Oberkanten der Transportvorrichtung der Stärke des kleinsten zu pökelnden Fleischstückes. Die Gleitschienen sind über vier eine Verstellung zulassende Bauelemente 6 am Gehäuse 1 befestigt. Für größere Fleischstücke kann zwischen den Gleitschienen 4 und Transportvorrichtung 3 der Abstand durch Verstellen derselben vergrößert werden.

Im Betrieb gelangen die Fleischstücke nacheinander zwischen die Gleitschienen 4 und die Transportvorrichtung 3 und werden von der ersten Injektionsnadelwalze 2 erfaßt, deren Nadeln in die Fleischstücke eintauchen, und zwar etwa bis zu zwei Drittel der betreffenden Fleischstücke. Beim Eintauchen der Injektionsnadeln geraten die radialen Kanäle, wie oben beschrieben, der gerade eintauchenden Injektionsnadeln vor die Ausnehmungen des Rohres 80, so daß aus den Injektionsnadeln Pökellake in das Fleisch gespritzt wird. Die Fleischstücke werden dann weitergefördert und geraten in den Wirkbereich der zweiten Injektionsnadelwalze 2, wo sich der Injektionsvorgang wiederholt, und, bedingt durch einen vorgesehenen seitlichen Versatz der Nadelkränze, jeweils zwischen den Injektionslöchern, die von der ersten Injektionsnadelwalze 2.1 hervorgerufen wurden. Das Fleischstück wird dann von der nächsten Injektionsnadelwalze 2. erfaßt und der Vorgang wiederholt sich bis das Fleischstück die letzte Injektionsnadelwalze verlassen hat und aus dem Zwischenraum zwischen den Gleitschienen 4 und der Transportvorrichtung 3 herausgeschoben wird. Es kann dann durch einen nicht dargestellten Abförderer weitergefördert oder gesammelt werden.

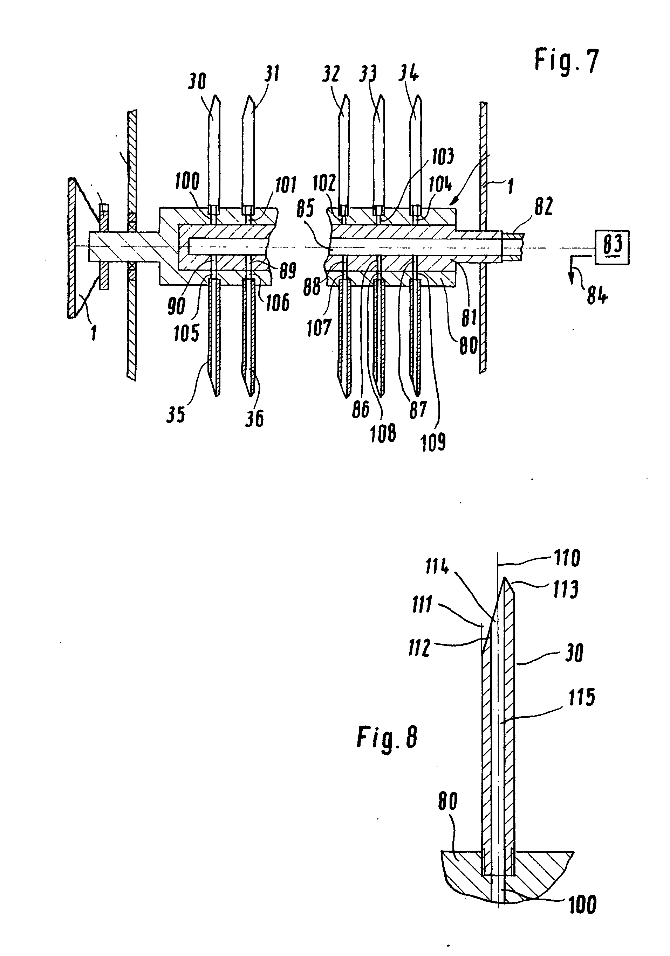

Bei der in Fig. 7 im Schnitt dargestellten Nadelwalze ist mit 80 ein Walzenmantel bezeichnet, der formschlüssig und drehbar auf ein stationär am Gehäuse 1 befestigtes Rohr 81 gesteckt ist. Das Rohr 81 weist einen Vierkant 82 auf, der verdrehungssicher im Gehäuse 1 steckt und durch je einen Anschlußstutzen verlängert ist. An die Anschlußstutzen ist über Rohrleitungen ein Pökellakenvorratsbehälter 83 angeschlossen. Der Anschlußstutzen führt in den Hohlraum des Rohrs 81. In das Rohr 81 sind nach unten gerichtete Bohrungen 86, 87, 88, 89, 90 eingebracht, die bis in den Hohlraum 85 des Rohres 81 reichen.

Die Injektionsnadeln 30, 31, 32, 33, 34, 35, 36 sind radial gerichtet in den Walzenmantel 80 eingeschraubt und münden in radiale Kanäle 100, 101 bis 109 ... des Walzenmantels 80, die von der Innenseite des Walzenmantels 80 ausgehen. Bei jedem Umlauf des Walzenmantels 80 gelangen die Kanäle 100, 101 ... einmal über die Ausnehmungen 86-90 des Rohres 80, wobei die unter Druck stehende Pökellake aus dem Hohlraum 85 über die radialen Kanäle in eine Injektionsnadel 30 gelangt und von dieser in ein Fleischstück eingespritzt wird.

Die Injektionsnadeln bestehen, wie für die Injektionsnadel 30 aus Figur 8 ersichtlich, aus einem Rohrstück, das in den Walzenmantel 80 eingeschraubt ist und an seinem freien Ende im spitzen Winkel 111 zur Achse 110 der Injektionsnadel 30 schräg abgeschliffen ist. Die Schlifffläche ist mit 112 bezeichnet. An der Spitze ist ein dachartiger Gegenschliff 113 vorgesehen, der jedoch die Austrittsöffnung 114 des Kanals 115 der Injektionsnadel 30 nicht berührt. Die Injektionsnadeln sind gleichartig, zu mehreren Kränzen in gleichmäßigem Abstand über die Länge verteilt und innerhalb der einzelnen Kränze gleichmäßig auf den Umfang verteilt. Die Abstände zwischen den einzelnen Kränzen sind so groß, daß die Gleitschienen 4 dazwischen passen.

## Ansprüche

1. Vorrichtung zum Pökeln von Fleischstücken im Durchlauf mit einem Zuförderer (8), der in den Raum zwischen zwei um horizontale parallele Achsen weiterfördernd angetriebenen Injektionsnadelwalzen (2) mündet, die mit ihren Injektionsnadeln (30, 31...) in die durchlaufenden Fleischstücke einstechen und dabei Pökellake aus einem im Innern der Injektionsnadelwalzen vorgesehenen Leitungssystem einspritzen, wobei jede Injektionsnadelwalze (2) aus einem, mit radialen Bohrungen (210) versehenen, zylinderförmigen Hohlkörper (2.1) besteht, in welchem die Injektionsnadeln (30, 31...) radial beweglich eingesetzt sind, und innerhalb des Hohlkörpers (2.1) der Nadelwalzen ein stationär am Gehäuse befestigtes, an einen unter Druck stehenden Pökellakenbehälter (83) angeschloßenes Rohr (811) konzentrisch zu dem Hohlkörper (2.1) angeordnet ist, um welches die Nadelwalzen (2) drehbar sind, dadurch gekennzeichnet, daß mindestens zwei Injektionsnadelwalzenpaare mit Sicherheitsabstand zwischen den Nadelspitzen angeordnet sind, und daß die Injektionsnadeln (30, 31...) mit an der der Drehachse zugewandten Seite verschloßenen Längsbohrungen (301) versehen sind, und daß der Innendurchmesser der Hohlkörper (2.1) größer ist als der Außendurchmesser des mit Bohrungen (90) versehenen Rohres (811) und daß das Rohr (811) eine den passierenden Fleischstücken zugewandten Abflachung (812) aufweist, und die Injektionsnadeln in den Hohlraum zwischen dem Rohr (811) und dem Hohlkörper (2.1) so weit hineinragen, daß sie die Außenfläche des Rohres (811) berühren, daß weiterhin die Injektionsnadeln im Bereich der Hohlkörper eine senkrecht zur Längsbohrung (301) verlaufende zusätzliche Bohrung (302) aufweisen, welche bei einer Verschiebung der Hohlnadeln zur Drehachse hin in den mit unter Druck stehender Pökellake gefüllten Hohlraum (813) zwischen dem Rohr (811) und dem Hohlkörper (2.1) gelangen und so Pökellake unter Druck in die Hohlnadeln eindringen läßt (Fig. 1-4).

2. Vorrichtung nach Anspruch 1, dadurch gekennzeichnet, daß das Rohr (811) an seinen Enden dichtende Muffen aufweist, um welche die Nadelwalzen drehbar sind.

3. Vorrichtung nach Anspruch 1 oder 2, dadurch gekennzeichnet, daß die Injektionsnadeln (30....) an der der Drehachse zugewandten Seite einen aus einem gegen Pökellake widerstandsfähigen Stoff bestehenden halbkugelförmigen Verschlußstopfen (303) aufweisen, welcher an der Oberfläche des Rohres (811) anliegt.

4. Vorrichtung zum Pökeln von Fleischstücken im Durchlauf mit einem Zuförderer (8 ; 3), der in den Raum von um horizontale Achsen weiterfördernd angetriebenen Injektionsnadelwalzen (2) mündet, die mit ihren Injektionsnadeln (30, 31...) in die durchlaufenden Fleischstücke einstechen und dabei Pökellake aus einem im Innern der Injektionsnadelwalzen vorgesehenen Leitungssystem einspritzen, wobei jede Injektionsnadelwalze (2) aus einem, mit radialen Bohrungen (100-109) versehenen, zylinderförmigen Hohlkörper (80) besteht, in welche Injektionsnadeln (30, 31...) münden, und innerhalb des Hohlkörpers (80) der Nadelwalzen ein stationär am Gehäuse befestigtes, an einen unter Druck stehenden Pökellakenbehälter (83) angeschloßenes Rohr (81) konzentrisch zu dem Hohlkörper (80) angeordnet ist, um welches die Nadelwalzen (2) drehbar sind, dadurch gekennzeichnet, daß mindestens zwei Injektionsnadelwalzen mit Sicherheitsabstand zwischen den Nadelspitzen achsparallel angeordnet sind und daß die Injektionsnadeln (30, 31) mit durchgehenden Längsbohrungen (115) versehen sind, daß den radialen Bohrungen der Hohlkörper, in der den passierenden Fleischstücken zugewandten Partie des Rohres (81), bis zum Hohlraum (85) reichende Bohrungen (86-90) gegenüberliegen, daß im Wirkbereich der Injektionsnadeln (30, 31...) der Injektionsnadelwalzen Gleiter (15, 14 ; 4) für die hindurchlaufenden Fleischstücke vorgesehen sind (Fig. 7 und 8).

5. Vorrichtung nach Anspruch 1 oder 4 dadurch gekennzeichnet, daß die Gleiter aus mehreren sich in Förderrichtung in Lücken zwischen den Injektionsnadeln (30, 31...) erstreckenden, miteinander verbundenen Gleitschienen (14-20) bestehen und in Stützlagern (63-68 ; 6) am Gehäuse befestigt sind.

6. Vorrichtung nach einem der vorhergehenden Ansprüche, dadurch gekennzeichnet, daß als Injektionsnadeln (30...) Rohre dienen, die an ihrem freien Ende im spitzen Winkel zur Nadelachse abgeschliffen sind (Fig. 8).

7. Vorrichtung nach Anspruch 6, dadurch gekennzeichnet, daß die Injektionsnadel einen dachförmigen, außerhalb der Injektionsöffnung (114) gelegenen Gegenschliff (113) aufweisen.

8. Vorrichtung nach Anspruch 7, dadurch gekennzeichnet, daß die Injektionsnadeln zumindest in der Einstichpartie im Querschnitt kreisförmig oder elliptisch sind, oder eine ähnliche runde Form aufweisen.

9. Vorrichtung zum Pökeln von Fleischstücken nach Anspruch 4, dadurch gekennzeichnet, daß jeweils je zwei Injektionsnadelwalzen übereinander angeordnet sind, und daß die am Gehäuse gelagerten Stützlager (63, 65, 67, 68) eine Bewegung der Gleiter rückwärts — den Abstand zum gegenüberliegenden Gleiter vergrößernd — gegen die Kraftwirkung eines Rückstellelementes und vorwärts bis an einen Anschlag erlauben.

10. Vorrichtung nach Anspruch 4, dadurch gekennzeichnet, daß die Injektionsnadelwalzen (2.) mit Sicherheitsabstand zwischen den Nadelspitzen achsparallel in Förderrichtung hintereinander, mit ihren Drehachsen in einer Ebene liegend angeordnet sind, und daß unterhalb der Injektionsnadelwalzen (2) eine mitlaufende Fördereinrichtung vorgesehen ist, deren Antrieb mit dem Antrieb der Injektionsnadelwalzen (2) gekuppelt ist, und welche ein endloses, aus mehreren gelenkig miteinander verbundenen Lamellen (3.1, 3.2...) bestehendes Band aufweist (Fig. 6).

## Claims

1. A device for salting pieces of continuously conveyed meat, comprising a feed conveyor (8) which leads into the space between two injection needle cylinders (2) which are driven about horizontal parallel axes to effect further conveying, and which with their injection needles (30, 31...) penetrate into the passing pieces of meat and thus inject brine from a control system provided in the interior of the injection needle cylinders, each injection needle cylinder (2) consisting of a cylinder-shaped hollow body (2.1) which is provided with radial bores (210) and in which the injection needles (30, 31...) are inserted in a radially mobile manner, there being disposed inside the hollow body (2.1) of the needle cylinders and fixed in a stationary manner to the housing a pipe (811) which is disposed concentric to the hollow body (2.1), is connected to a pressurised brine container (83), and about which the needle cylinders (2) are rotatable, characterised in that at least two pairs of injection needle cylinders are disposed such that a safety clearance exists between the needle points, and that the injection needles (30, 31...) are provided with longitudinal bores (301) closed at that end facing the axis of rotation, the inner diameter of the hollow body (2.1) being greater than the outer diameter of the pipe (811) provided with bores (90), and the pipe (811) having a flattened surface (812) facing the passing pieces of meat, and the injection needles projecting so far into the hollow compartment between the pipe (811) and the hollow body (2.1) that they make contact with the outer surface of the pipe (811) and moreover in that the injection needles have in the region of the hollow body an additional bore (302) which extends perpendicular to the longitudinal bore (301), and which, when the hollow needles are slid towards the axis of rotation, communicates with the hollow compartment (813) filled with pressurised brine between the pipe (811) and the hollow body (2.1), and thus allows pressurised brine to flow into the hollow needles. (Figures 1-4).

2. A device as claimed in claim 1, characterised in that the pipe (811) is provided at its ends with sealing bushes about which the needle cylinders are rotatable.

3. A device as claimed in claim 1 or 2, characterised in that the injection needles (30...) are provided at that end facing the axis of rotation with a hemispherical closure plug (303) which consists of a material resistant to brine, and which bears against the surface of the pipe (811).

4. A device for salting pieces of continuously conveyed meat, comprising a feed conveyor (8 ; 3) which leads into the vicinity of injection needle cylinders (2) which are driven about horizontal axes to effect further conveying, and which with their injection needles (30, 31...) penetrate into the passing pieces of meat and thus inject brine from a control system provided in the interior of the injection needle cylinders, each injection needle cylinder (2) consisting of a cylinder-shaped hollow body (80) which is provided with radial bores (100-109) and into which injection needles (30, 31...) open, there being disposed inside the hollow body (80) of the needle cylinders, and fixed in a stationary manner to the housing, a pipe (81) which is concentric to the hollow body (80), which is connected to a pressurised brine container (83), and about which the needle cylinders (2) are rotatable, characterised in that at least two injection needle cylinders are disposed with their axes parallel such that a safety clearance exists between the needle points, and that the injection needles (30, 31) are provided with longitudinal through bores (115), there being provided in that part of the pipe (81) which faces the passing pieces of meat, and opposite the radial bores in the hollow body, bores (86-90) which communicate with the hollow compartment (85), slide guides (15, 14 ; 4) for the conveyed pieces of meat being provided in the operational region of the injection needles (30, 31...) of the injection needle cylinders. (Figures 7 and 8).

5. A device as claimed in Claim 1 or 4, characterised in that the slide guides consist of several mutually connected slide bars (14-20) which extend in the conveying direction in gaps between the injection needles (30, 31...), and are fixed to the housing by support bearings (63-68 ; 6).

6. A device as claimed in one of the preceding claims, characterised in that the injection needles (30...) are in the form of pipes, each of which is ground at its free end to form an acute angle. (Figure 8).

7. A device as claimed in claim 6, characterised in that each injection needle has a roof-shaped counter-ground section (113) formed outside the injection opening (114).

8. A device as claimed in claim 7, characterised in that in their penetrating parts, the injection needles are of circular or elliptical cross-section, or have a similar round form.

9. A device for salting pieces of meat as claimed in claim 4, characterised in that the injection needle cylinders of each pair are disposed one above the other, and the support bearings (63, 65, 67, 68) which are supported on the housing allow each slide guide to move rearwards — such that the distance from the opposing slide guide increases — against the force of a return element, and forwards as far as a stop element.

10. A device as claimed in claim 4, characterised in that the injection needle cylinders (2. ) are disposed one behind the other in the conveying direction, with their axes parallel, with a safety clearance between their needle points, and with their axes of rotation lying in a plane, and in that below the injection needle cylinders (2. ) there is provided a concurrently running conveyor device having its drive coupled to the drive of the injection needle cylinders (2. ), and comprising an endless band consisting of several strips (3.1, 3.2...) hinged together. (Figure 6).

## Revendications

1. Dispositif pour la salaison de morceaux de viande en passage continu avec un transporteur d'amenée (8) qui débouche dans l'espace entre deux rouleaux (2) à aiguilles d'injection entraînés, de façon à continuer le transport, autour de deux axes horizontaux parallèles et qui piquent, par leurs aiguilles d'injection (30, 31...), dans les morceaux de viande passant en continu et injectent ainsi de la saumure de salaison à partir d'un système de canalisation prévu dans l'intérieur des rouleaux à aiguilles d'injection, chaque rouleau (2) à aiguilles d'injection se composant d'un corps creux cylindrique (2.1) pourvu d'orifices radiaux (210) et dans lequel les aiguilles d'injection (30, 31...) sont insérées de manière radialement mobile tandis qu'à l'intérieur du corps creux (2.1) des rouleaux à aiguilles, un tube (811), fixé stationnairement dans l'enveloppe et raccordé à un réservoir de saumure de salaison (83) mis sous pression, est monté concentriquement au corps creux (2.1), autour duquel tube, les rouleaux à aiguilles (2) sont rotatifs, caractérisé en ce qu'au moins deux paires de rouleaux à aiguilles d'injection sont montées avec une distance de sécurité entre les pointes d'aiguilles et en ce que les aiguilles d'injection (30, 31...) sont pourvues d'alésages longitudinaux (301) fermés du côté orienté vers l'axe de rotation, et en ce que le diamètre intérieur du corps creux (2.1) est plus grand que le diamètre extérieur du tube (811) pourvu d'orifices (90) et en ce que le tube (811) présente un méplat (812) tourné vers les morceaux de viande passants et les aiguilles d'injection pénètrent en saillie si loin dans la cavité entre le tube (811) et le corps creux (2.1) qu'elles touchent la surface extérieure du tube (811), en ce qu'en outre les aiguilles d'injection comportent, au voisinage des corps creux, un perçage supplémentaire (302) s'étendant perpendiculairement à l'alésage longitudinal (301) et qui, lors d'un déplacement de l'aiguille creuse en direction de l'axe de rotation, parvient dans la cavité (813), remplie de saumure de salaison mise sous pression, entre le tube (811) et le corps creux (2.1) et laisse ainsi de la saumure de salaison sous pression pénétrer dans les aiguilles creuses. (Figure 1-4)

2. Dispositif selon la revendication 1, caractérisé en ce que le tube (811) comporte, à ses extrémités, des manchons assurant l'étanchéité, autour desquels les rouleaux à aiguilles sont rotatifs.

3. Dispositif selon la revendication 1 ou 2, caractérisé en ce que les aiguilles d'injection (30...) comportent, du côté orienté vers l'axe de rotation, un bouchon d'obturation hémisphérique (303) consistant à une matière capable de résister à la saumure de salaison et qui s'applique contre la surface du tube (811).

4. Dispositif de salaison de morceaux de viande en passage continu avec un transporteur d'amenée (8 ; 3) qui débouche dans l'espace de rouleaux (2) à aiguilles d'injection entraînés autour d'axes horizontaux de façon à continuer le transport et qui piquent par leurs aiguilles d'injection (30, 31...) dans les morceaux de viande passants et injectent ainsi de la saumure de salaison provenant d'un système de canalisation prévu dans l'intérieur des rouleaux à aiguilles d'injection, chaque rouleau à aiguilles d'injection (2) consistant en un corps creux cylindrique (80) pourvu d'orifices radiaux (100-109) et dans lequel débouchent des aiguilles d'injection (30, 31...) tandis qu'à l'intérieur du corps creux (80) des rouleaux à aiguilles, un tube (81), fixé stationnairement à l'enveloppe et raccordé à un réservoir de saumure de salaison (83) mis sous pression, est monté concentriquement au corps creux (80), autour duquel tube les rouleaux à aiguilles (2) sont rotatifs, caractérisé en ce qu'au moins deux rouleaux à aiguilles d'injection sont montés, en ayant leurs axes parallèles, avec une distance de sécurité entre les pointes d'aiguille et en ce que les aiguilles d'injection (30, 31) sont pourvues d'alésages longitudinaux traversants (115), en ce que, dans la partie du tube (81) orientée vers les morceaux de viande passants, des perçages (86-90), s'étendant jusqu'à la cavité (85), sont en regard des orifices du corps creux, et en ce que, dans le domaine d'action des aiguilles d'injection (30, 31...) des rouleaux à aiguilles d'injection sont prévues des glissières (15, 14 ; 4) pour les morceaux de viande passant en continu. (Figures 7 et 8).

5. Dispositif selon la revendication 1 ou 4, caractérisé en ce que les glissières se composent de plusieurs rails de glissement (14-20) s'étendant en direction de transport dans des intervalles entre les aiguilles d'injection (30, 31...) et reliés entre eux et sont fixées à l'enveloppe dans des supports (63, 68 ; 6).

6. Dispositif selon l'une des revendications précédentes, caractérisé en ce que comme aiguilles d'injection (30...) servent des tubes qui sont meulés, à leurs extrémités libres, suivant un angle aigu par rapport à l'axe d'aiguille. (Figure 8).

7. Dispositif selon la revendication 6, caractérisé en ce que les aiguilles d'injection présentent une partie contre-meulée (113) en forme de toit, située extérieurement à l'orifice d'injection (114).

8. Dispositif selon la revendication 7, caractérisé en ce qu'en section transversale, les aiguilles d'injection sont circulaires ou elliptiques ou présentent une forme ronde analogue, au moins dans la partie piquante.

9. Dispositif pour la salaison des morceaux de viande selon la revendication 4, caractérisé en ce que deux rouleaux à aiguilles d'injection sont chaque fois respectivement superposés et en ce que les supports (63, 65, 67, 68), fixés à l'enveloppe, permettent un mouvement des glissières en arrière contre l'action de force d'un élément de rappel en augmentant la distance à la glissière opposée et en avant jusqu'à venir contre une butée.

10. Dispositif selon la revendication 4, caractérisé en ce que les rouleaux à aiguilles d'injection (2) sont montés les uns derrière les autres en direction de transport en ayant leurs axes parallèles, avec une distance de sécurité entre les pointes d'aiguille et en ayant leurs axes de rotation placés dans un plan et en ce qu'en dessous des rouleaux à aiguilles d'injection (2) est prévu un système transporteur se mouvant de façon concomitante, dont la commande est couplée avec l'entraînement des rouleaux à aiguilles d'injection (2) et qui comporte une bande sans fin se composant de plusieurs lamelles (3.1, 3.2...) reliées les unes aux autres de façon articulée. (Figure 6).

Fig.1

*Fig. 2*

Fig. 3

0 029 446

*Fig. 4*

210

812

30

211

2.1

212

813

90

811

0 029 446

Fig. 5

Fig. 6

Fig. 7

Fig. 8